# EUROPÄISCHE PATENTSCHRIFT

(11) **EP 0 742 116 B1**
(45) Veröffentlichungstag und Bekanntmachung des Hinweises auf die Patenterteilung: **10.10.2001**
(21) Anmeldenummer: 96106700.6
(22) Anmeldetag: 27.04.1996
(51) Int. Cl.: B60H 1/32

(54) **Fahrzeug-Klimaanlage**
Vehicle air conditioning apparatus
Installation de climatisation de véhicule

(30) Priorität: 10.05.1995 CH 134895
(43) Veröffentlichungstag der Anmeldung: 13.11.1996
(73) Patentinhaber: Audi Aktiengesellschaft, 85057 Ingolstadt (DE); Bayerische Motoren Werke Aktiengesellschaft, 80809 München (DE); DaimlerChrysler AG, 70567 Stuttgart (DE)
(72) Erfinder: Frey, Michael, 88131 Lindau (DE); Obrist, Frank, 6850 Dornbirn (AT)
(74) Vertreter: Quehl, Horst Max, Dipl.-Ing.

(56) Entgegenhaltungen:
- WO-A-90/07683
- DE-A- 4 139 186
- DE-U- 9 116 437
- US-A- 5 205 718

## Beschreibung

Die Erfindung betrifft eine Fahrzeug-Klimaanlage nach dem CO₂-Kaltdampfverfahren, bei dem Kohlendioxyd (C02) als Kältemittel in einem geschlossenen Kreislauf mittels eines Verdichters zirkuliert wird, wobei in Strömungsrichtung hintereinander zumindest zwei Wärmetauscher angeordnet sind und einerseits zwischen diesen ein Verdichter und auf der gegenüberliegenden Seite des Kreislaufs zwischen ihnen ein Expansionsventil angeordnet ist.

Der grundsätzliche Vorteil der Anwendung von CO₂ liegt im Gegensatz zur Anwendung anderer Kältemittel darin, dass sich keine Belastung der Umwelt ergeben kann.

Eine nach dem CO₂-Kaltdampfverfahren arbeitende Klimaanlage ist beispielsweise bekannt durch die EP-B-0424474. Bei ihr erfolgt die Regelung der Kälteleistung, indem das zirkulierende Kältemittel nach dem Expansionsventil und vor dem Verdichter durch ein Reservoir geführt wird, so dass sich die Menge des zirkulierenden Kältemittels durch Verdampfung aus dem Reservoir in Abhängigkeit vom Regeldruck des die Anlage regelnden Expansionsventils ändert. Eine solche Regelung spricht jedoch nur mit erheblicher Verzögerung an, und es ergibt sich nur eine relativ schmaler Regelbereich von maximal 1 : 3.

Durch die US-A-5,205,718 ist es weiterhin bei Anwendung eines anderen Kältemittels bekannt, die Kälteleistung durch Regelung der Hubweite der Kolben eines Taumelscheibenverdichters zu verändern. Hierzu dient eine durch ein Regelventil hergestellte Verbindung zwischen der Druckseite und dem Triebraum des Verdichters , so dass sich die Neigung der Taumelscheibe und damit die Hubweite in Abhängigkeit vom Druck im Triebraum einstellt. Auf diese Weise ist ein erheblich grösserer Regelbereich erreichbar, wie er für die Anwendung in einer Fahrzeug-Klimaanlage anzustreben ist.

Der Anwendung eines Taumelscheibenverdichters für ein CO₂-Kaltdampfverfahren standen als Hindernis die wesentlich höheren Druck-und Temperaturbelastungen am Verdichter im Wege, die u.a. durch schnelle Alterung oder Verkoken des Schmieröls zu Schäden z.B. an seiner Gleitringdichtung und seiner Taumelscheibenmechanik geführt hätten.

Der Erfindung liegt die Aufgabe zugrunde, einen einfach realisierbaren Weg zu finden, die Vorteile der Anwendung von CO₂ als Kältemittel mit den regeltechnischen Vorteilen der Anwendung eines über den Druck im Triebraum geregelten Verdichters zu verbinden, ohne dass am Verdichter schädliche Betriebsbedingungen auftreten können, so dass für eine Fahrzeug-Klimaanlage der eingangs genannten Art bei grossem Regelbereich eine hohe Betriebssicherheit erreicht wird.

Die Lösung dieser Aufgabe erfolgt bei einer Anlage der eingangs genannten Art erfindungsgemäss dadurch, dass der Verdichter über den Druck in seinem Triebraum regelbar ist und ein aus dem Kreislauf abgezweigter Teilkreislauf in den Triebraum des Verdichters und aus diesem heraus zu seiner Saugleitung führt, wobei in dem Teilkreislauf ein die Strömungsmenge begrenzendes Ventil und ein Regelventil vorgesehen sind, so dass der Druck im Triebraum und damit die Leistung des Verdichters regelbar ist und wobei sich die Abzweigstelle in Richtung der Kreislaufströmung zwischen dem in Strömungsrichtung ersten Wärmetauscher und dem Expansionsventil befindet, so dass der Teilkreislauf den Verdichter kühlt.

Vorteilhafte Ausführungsformen der Erfindung sind Gegenstand der abhängigen Patentansprüche und der folgenden Beschreibung anhand der Zeichnungen zu entnehmen.

Es zeigt:
- Fig. 1: eine schematische Darstellung einer ersten Ausführungsform einer Klimaanlage mit einer Querschnittsdarstellung eines Taumelscheibenverdichters,
- Fig.2: eine schematische Darstellung einer zweiten Ausführungsform einer Klimaanlage, mit einem Taumelscheibenverdichter, dessen Taumelscheibe in eine andere Arbeitsposition eingeregelt ist als nach Fig.1 und
- Fig.3: eine schematische Darstellung einer dritten Ausführungsform einer Klimaanlage, mit einem eine Magnetkupplung aufweisenden Taumelscheibenverdichter.

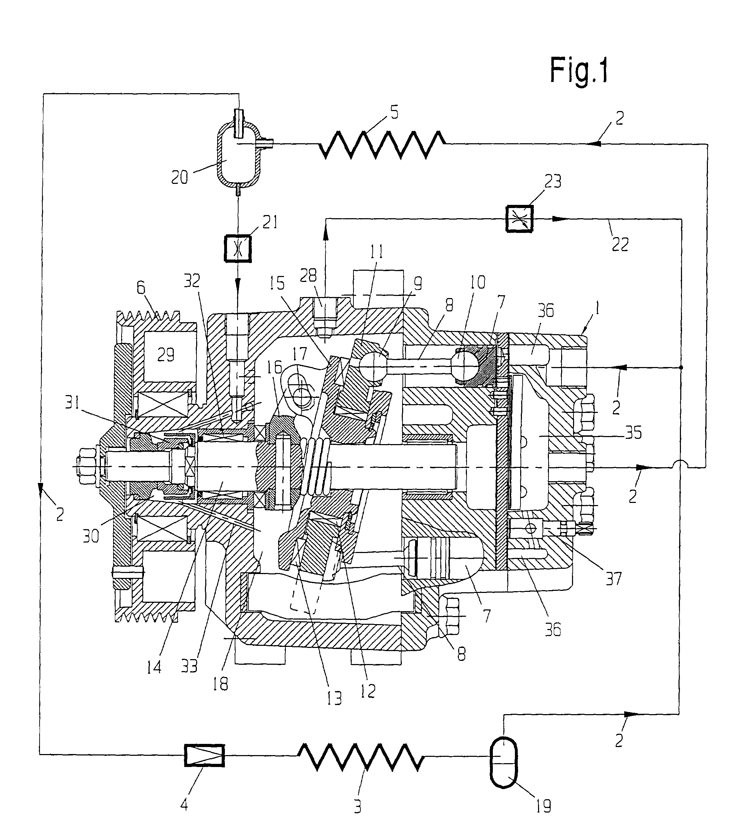

Eine Anlage zur Ausführung des erfindungsgemässen Verfahrens hat entsprechend den Darstellungen der Fig.1, 2 und 3 auf an sich bekannte Weise einen Verdichter 1, einen sich in Richtung der Zirkulation entsprechend dem Pfeil 2 anschliessenden Wärmetauscher 5, in welchem dem zirkulierenden Kältemittel Wärme entzogen wird, ein sich in Kreislaufrichtung anschliessendes Expansionsventil 4 und einen weiteren Wärmetauscher 3, durch den die Kühlung erfolgt, indem das Kühlmittel in diesem von aussen Wärme aufnimmt.

Für die Klimatisierung des Fahrgastraumes eines Kraftfahrzeuges wird der bei unterkritisch arbeitenden Kühlprozessen üblicherweise als Kondensator bezeichnete erste Wärmetauscher 5 durch Umgebungsluft gekühlt, indem diese den Wärmeaustauscher 5 als Fahrtwind anströmt oder durch ein zusätzliches Gebläse angeblasen wird. Der Wärme aufnehmende bzw. kühlende zweite Wärmetauscher 3, der üblicherweise als Verdampfer bezeichnet wird, ist in dem Frischluftverteilsystem des Kraftfahrzeuges oder einem zugehörigen Nebenstromkanal dieses Systems angeordnet, so dass die Frischluft bei Bedarf gekühlt werden kann. In Strömungsrichtung hinter dem zweiten Wärmetauscher 3 kann ein Pufferbehälter 19 vorgesehen sein, indem ein nicht verdampfter Teil des Kältemittels (CO₂) sich absetzt, so dass entsprechend dem Betriebszustand der Anlage in diesem Behälter eine Vorratsmenge an Kältemittel vorhanden ist.

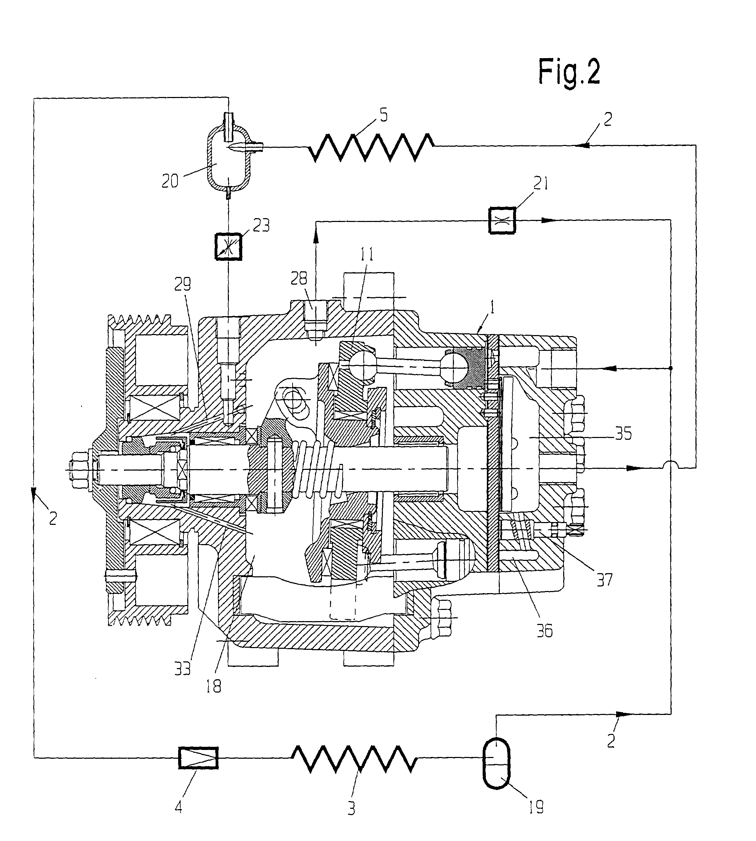

Der als regelbarer Taumelscheibenverdichter 1 ausgeführte Verdichter 1 ist bei dem Ausführungsbeispiel der Fig.1 und 2 mit dem Fahrzeugantrieb z.B. durch einen nichtdargestellten Keilriemen verbunden, der auf der Riemenscheibe 6 läuft. Sein grundsätzlicher Aufbau und seine grundsätzliche Wirkungsweise sind an sich durch die Fachliteratur bekannt, wie z.B. durch die US-A-5,205,718 oder die DE-A-4139186. Es versteht sich, dass die Erfindung für jede Art von Verdichtern anwendbar ist, deren Leistungsregelung über den geregelten Druck in ihrem Triebraum (18) erfolgt.

Die Kolben 7 des Taumelscheibenverdichters 1, von denen beispielsweise sieben in Umfangsrichtung des Verdichters nebeneinander angeordnet sind, werden durch Stangen 8 betätigt, deren beiden Enden durch Kugelköpfe 9,10 schwenkbar einerseits am Kolben 7 und andererseits an der Taumelscheibe 11 gelagert sind. Die Taumelscheibe 11 ist durch ein Radiallager 12 und ein Axiallager 13 auf einem sich mit der Antriebswelle 14 drehenden und schwenkbar gelagerten Scheibenträger 15 gehalten, so dass die Drehbewegung des schräggestellten Scheibenträgers 15 eine Taumelbewegung der Taumelscheibe 11 bewirkt und folglich die mit letzerer verbundenen Kolben 7 eine Hubbewegung ausführen. Die Verbindung zwischen der Antriebswelle 14 und dem Scheibenträger 15 erfolgt durch ein am Ende eines Mitnehmerarmes 16 vorgesehenes Mitnehmergelenk 17. Die Kraft für die Schwenkbewegung des Scheibenträgers 15 und der auf diesem gelagerten Taumelscheibe 11 um das Mitnehmergelenk 17 ergibt sich aus der Summe der jeweils beidseitig der Kolben 7 gegeneinander wirkenden Drücke, so dass diese Kraft vom Druck im Triebraum 18 abhängig ist.

Fig.1 und Fig.2 zeigen zwei Positionen der Neigung der Taumelscheibe 11. Entsprechend der Neigung der Taumelscheibe ändert sich der untere Totpunkt der Kolbenbewegung während der obere Totpunkt unverändert oder weitgehend unverändert bleibt. Je höher der Druck an der Unterseite der Kolben 7 bzw. im Triebraum 18 relativ zum Druck auf der Oberseite der Kolben 7 bzw. auf der Saugseite des Verdichters 1, umso kleiner wird die Hubweite der Kolben 7 und damit die Förderleistung des Verdichters 1.

Da für die Herstellung eines Regeldruckes im Triebraum 18 des Verdichters CO₂ in diesen einströmt und zur Saugseite wieder abgeleitet wird, ist es unvermeidlich, dass in den CO₂-Kreislauf Oel gelangt, das für die Schmierung der bewegten Teile des Verdichters 1 vorgesehen werden muss.

Um das Oel aus dem Kühlkreislauf 2 in den Triebraum zurückzuführen ist entsprechend dem Ausführungsbeispiel nach Fig.1 in Strömungsrichtung hinter dem ersten Wärmetauscher 5 ein Oelabscheider 20 vorgesehen. Für diesen wird z.B. das Zyklonprinzip benutzt, indem die Zuströmung tangential zu seiner zylindrischen Wand gerichtet ist. Die Anordnung hinter dem Wärmeaustauscher 5 führt infolge der abgesenkten Temperatur zu einer leichteren Abtrennung aus dem im überkritischen Zustand vorliegenden CO₂. Der Bodenablauf des Oelabscheiders 20 bzw. oder eine oelabscheidenden Stelle des Wärmetauschers 5 ist über eine Konstantdrossel 21 mit dem Triebraum 18 des Verdichters 1 verbunden, so dass das abgeschiedene Oel zusammen mit Kühlmittel (CO₂) in den Triebraum 18 gelangt. Diese Verbindung bildet einen aus dem Hauptkreislauf 2 abgezweigten Teilkreislauf 22, so dass eine Verbindung aus dem Triebraum 18 des Taumelscheibenverdichters 1 heraus zur Saugleitung des Verdichters führt.

Der über den Triebraum 18 geführte Teilkreislauf 22 hat neben der Rückführung von Oel und der Kühlung des Verdichters 1 die weitere Aufgabe, die Leistung des Verdichters 1 zu regeln. Hierfür ist in dem Teilkreislauf 22 zusätzlich zu der die Strömungsmenge begrenzenden Konstantdrossel 21 ein Regelventil 23 vorgesehen, das den Druck im Triebraum und damit die Hubweite der Kolben 7 bestimmt.

Das Ausführungsbeispiel der Fig.2 unterscheidet sich von dem nach Fig.1 durch die umgekehrte Anordnung der Konstantdrossel 21 und dem Regelventil 23 im Teilkreislauf. Bei beiden Ausführungsbeispielen bewirkt eine bei der Strömung zum Triebraum 18 hin erfolgende Expansion des Kühlmittels (CO₂) eine Temperaturabsenkung, die zusätzlich zu der im Wärmetauscher 5 erfolgenden Kühlung 5 erzielt wird.

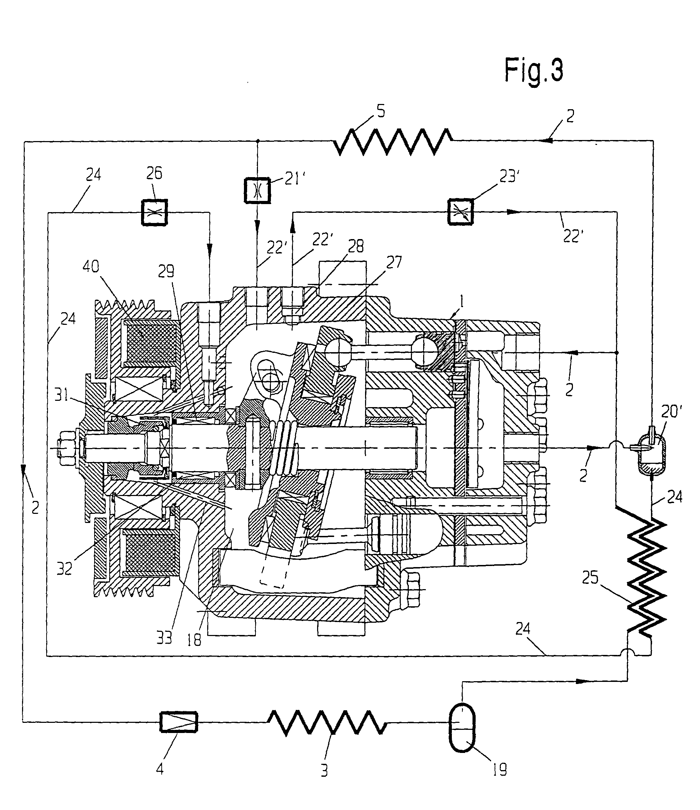

Beim Ausführungsbeispiel nach Fig.3 ist der Oelabscheider 20' vor dem ersten Wärmetauscher 5 im Hauptkreislauf 2 angeordnet. Um das abgeschiedenen Oel gekühlt zum Triebraum 18 zurückzuführen, ist ein separater Oelkreislauf 24 vorgesehen, in dem ein Oelkühler 25 angeordnet ist, durch den das abgeschiedene Oel unter dem hochdruckseitigen Druck des Verdichters gefördert wird. Dabei wird die Strömungsmenge zu dem Triebraum 18 durch eine Konstantdrossel 26 begrenzt. Die Oelkühlung erfolgt im Gegenstrom zum Hauptkreislauf 2, indem der Oelkühler 25 in Strömungsrichtung des Hauptkreislaufs 2 hinter dem zweiten Wärmeaustaucher 3 angeordnet ist. Auch bei dieser Ausführungsform der Klimaanlage ist für die Regelung und Kühlung des Verdichters 1 ein Teilkreislauf 22' vorgesehen, der nach dem ersten Wärmetauscher 5 abgezweigt ist und eine Konstantdrossel 21' sowie ein Regelventil 23' aufweist.

Weiterhin kann in dem den Triebraum 18 verlassenden Teil des Teilkreislaufs 22,22' vorzugsweise in der Gehäusewand 27 des Triebraumes 18 ein weiterer Oelabscheider 28 vorgesehen sein, der Oel im Triebraum 18 zurückhält.

Die Zuleitung von rückgeführtem, gekühltem Oel in den Triebraum 18 erfolgt vorzugsweise durch eine schräg verlaufende Bohrung 29 in einen der Abdichtung und Wellenlagerung dienenden Nebenraum 30 des Triebraumes 18, so dass besonders auch dort die Gleitringdichtung 31 und die Wellenlagerung 32 mit Oel versorgt und gut gekühlt werden. Aus diesem Nebenraum 30 wird das Oel zu dem den Taumelscheibenantrieb 11,15 einschliessenden Hauptraum des Triebraumes 18 über eine Bohrung 33 geleitet, die von einer bestimmten Stelle im unteren Bereich des Nebenraumes 30 aus oder mit einer bestimmten Neigung verläuft, so dass garantiert ist, dass eine die gute Schmierung im Nebenraum 30 gewährleistende Oelmenge zurückgehalten wird.

Um ein nachteiliges Zu- und Abschalten des Verdichters 1 zur Regelung oder Abschaltung der Kälteleistung zu vermeiden, ist in weiterer Ausführungsform der Erfindung vorgesehen, die Förderleistung des Verdichters bis auf Null zurückzustellen, so dass die zum Ausführungsbeispiel nach Fig.2 gezeigte Magnetkupplung 40 überflüssig wird. Hierfür kann die Strömung am Verdichter 1 durch ein in Fig.1 und 2 gezeigtes Ventil 37 kurzgeschlossen werden, das zwischen dessen Saugseite 36 und Druckseite 35 des Verdichters 1 angeordnet ist. Fig.1 zeigt den Schaft des Ventils 37 in geschlossener Drehposition, während in Fig.2 der Zustand bei Nulleistung gezeigt ist, bei der die Taumelscheibe 11 die geringste Neigung und der Ventilschaft in geöffnerter Drehposition steht.

Es wäre auch möglich, für eine Nullregelung stattdessen die Funktion der Ventile des Verdichters abzuschalten, so dass ebenfalls eine Förderung bzw. Kompression von CO₂ verhindert wird.

Im übrigen versteht es sich, dass die Ausführungsformen der Erfindung nach Fig.1 oder 2 mit derjenigen nach Fig. 3 kombiniert werden können, indem je ein Oelabscheider 20 und 20' vor und hinter dem Wärmetauscher 5 angeordnet sein kann.

## Patentansprüche

1. Fahrzeug-Klimaanlage nach dem CO₂-Kaltdampfverfahren, bei dem Kohlendioxyd (CO2) als Kältemittel in einem geschlossenen Kreislauf (2) mittels eines Verdichters (1) zirkuliert wird, wobei in Strömungsrichtung hintereinander zumindest zwei Wärmetauscher (3,5) angeordnet sind und einerseits zwischen diesen ein Verdichter (1) und auf der gegenüberliegenden Seite des Kreislaufs (2) zwischen ihnen ein Expansionsventil (4) angeordnet ist, **dadurch gekennzeichnet, dass** der Verdichter über den Druck in seinem Triebraum (18) regelbar ist und ein aus dem Kreislauf abgezweigter Teilkreislauf (22,22') in den Triebraum (18) des Verdichters (1) und aus diesem heraus zu seiner Saugleitung führt, wobei in dem Teilkreislauf ein die Strömungsmenge begrenzendes Ventil (21,21') und ein Regelventil (23,23') vorgesehen sind, so dass der Druck im Triebraum (18) und damit die Leistung des Verdichters regelbar ist und wobei sich die Abzweigstelle in Richtung der Kreislaufströmung zwischen dem in Strömungsrichtung ersten Wärmetauscher (5) und dem Expansionsventil (4) befindet, so dass der Teilkreislauf (22,22') den Verdichter (1) kühlt.

2. Klimaanlage nach Anspruch 1, **dadurch gekennzeichnet, dass** in dem Kreislauf (2) in Strömungsrichtung hinter dem ersten Wärmetauscher (5) eine Oelabscheidestelle (20) angeordnet ist, wobei sich die Abzweigstelle für den durch den Triebraum (18) führenden Teilkreislauf (22,22') an der Oelabscheidestelle (20) befindet, so dass der Teilstrom im Bereich der Oelabscheidestelle (20) abgeschiedenes Oel zum Triebraum (18) hin mitnimmt.

3. Klimaanlage nach Anspruch 1 oder 2, **dadurch gekennzeichnet, dass** in Strömungsrichtung zwischen dem Verdichter (1) und dem ersten Wärmetauscher (5) ein Oelabscheider angeordnet ist, aus dem das Oel unter dem hochdruckseitigen Druck des Verdichters (1) durch einen zusätzlich zu dem Teilkreislauf (22') vorgesehenen Oelkreislauf (24) dem Triebraum (18) des Verdichters (1) zugeführt wird, wobei in dem Oelkreislauf (24) ein die Strömung begrenzendes Ventil (26) angeordnet ist.

4. Klimaanlage nach einem der Ansprüche 1 bis 3, **dadurch gekennzeichnet, dass** der abgezweigte Teilkreislauf (22) oder der Oelkreislauf (24) in den der Wellenabdichtung (31) und Wellenlagerung (32) dienenden Nebenraum (30) und von diesen in den Hauptraum des Triebraumes (18) verläuft.

5. Klimaanlage nach einem der Ansprüche 1 bis 4, **dadurch gekenzeichnet, dass** der abgezweigte Teilkreislauf (22) oder der Oelkreislauf (24) durch mindestens eine Gehäusebohrung (29,33) verläuft, die in der Nähe der Wellenabdichtung (31) verlauft.

6. Klimaanlage nach einem der Ansprüche 1 bis 5, **dadurch gekennzeichnet, dass** am Triebraum (18) ein vom Teilkreislauf (22,22') durchströmter Oelabscheider (28) angeordnet ist, der eine Oelmitnahme aus dem Triebraum (18) behindert.

7. Klimaanlage nach Anspruch 3, **dadurch gekennzeichnet, dass** in dem Oelkreislauf ein Gegenstrom-Oelkühler (25) vorgesehen ist, wobei der Gegenstromteil des Oelkühlers (25) in Strömungsrichtung zwischen dem zweiten Wärmeaustauscher (3) und der Saugseite des Verdichters (1) angeordnet ist.

8. Klimaanlage nach einem der Ansprüche 1 bis 7, **dadurch gekennzeichnet, dass** ein von dem Nebenraum (30) in den Hauptraum des Triebraumes (18) führender Oelkanal von der tiefsten Stelle des Nebenraumes (30) schräg nach oben führt, so dass sich im Boden des Nebenraumes (30) Oel ansammelt.

9. Klimaanlage nach einem der Ansprüche 1 bis 8, **dadurch gekennzeichnet, dass** der Verdichter (1) in steter Antriebsverbindung mit einem Fahrzeugantrieb steht, wobei die Leistung des Verdichters (1) bis auf Null regelbar ist.

10. Klimaanlage nach Anspruch 9, **dadurch gekennzeichnet, dass** für die Leistungsregelung des Verdichters (1) bis auf Null zwischen seinem Druck- und Saugraum (35,36) eine ein Ventil (37) aufweisende Verbindung vorgesehen ist.

## Claims

1. Vehicle air conditioning system according to the CO₂ cold vapour process, in which carbon dioxide (CO₂) as the refrigerant is circulated in a closed circuit (2) by means of a compressor (1), at least two heat exchangers (3, 5) being successively arranged in the flow direction and a compressor (1) is positioned between them on one side and an expansion valve (4) is located between them on the opposite side of the circuit (2), wherein the compressor is controllable via the pressure in its drive chamber (18) and a partial circuit (22, 22') branched from the circuit in the drive chamber (18) of the compressor (1) leads from the latter to its suction line, the partial circuit containing a valve (21, 21') limiting the flow quantity and a control valve (23, 23'), so that the pressure in the drive chamber (18) and therefore the capacity of the compressor can be controlled and the branching point is located in the direction of the circuit flow between the first heat exchanger (5) in the flow direction and the expansion valve (4), so that the partial circuit (22, 22') cools the compressor (1).

2. Air conditioning system according to claim 1, wherein an oil separation point (20) is provided in the circuit (2) behind the first heat exchanger (5) in the flow direction, the branching point for the partial circuit (22, 22') leading through the drive chamber (18) being located at the oil separation point (20), so that the partial flow in the vicinity of the oil separation point (20) carries separated oil to the drive chamber (18).

3. Air conditioning system according to claim 1, wherein an oil separator is provided in the flow direction between the compressor (1) and the first heat exchanger (5), from which the oil is supplied under the high pressure side pressure of the compressor (1) through an oil circuit (24) provided in addition to the partial circuit (22') to the drive chamber (18) of the compressor (1), a flow-limiting valve (26) being located in the oil circuit (24).

4. Air conditioning system according to claim 1, wherein the branched partial circuit (22) runs in the secondary chamber (30) used for shaft sealing (31) and shaft mounting (32) and from said secondary chamber into the main chamber of the drive chamber (18).

5. Air conditioning system according to claim 1, wherein the branched partial circuit (22) runs through at least one casing bore (29, 33) in the vicinity of the shaft seal (31).

6. Air conditioning system according to claim 1, wherein an oil separator (28) through which flows the partial circuit (22, 22') is provided on the drive chamber (18) and prevents an entraining of oil from said drive chamber (18).

7. Air conditioning system according to claim 3, wherein a countercurrent oil cooler (25) is provided in the oil circuit, the countercurrent part of the oil cooler (25) being located in the flow direction between the second heat exchanger (3) and the suction side of the compressor (1).

8. Air conditioning system according to claim 1, wherein an oil duct leading from the secondary chamber (30) into the main chamber of the drive chamber (18) passes in inclined upward direction from the lowest point of the secondary chamber (30), so that oil collects on the bottom of the secondary chamber (30).

9. Air conditioning system according to claim 1, wherein the compressor (1) is in constant drive connection with a vehicle drive, it being possible to set the capacity of the compressor (1) to zero.

10. Air conditioning system according to claim 9, wherein a connection having a valve (37) is provided between its pressure and suction chambers (35, 36) for regulating the capacity of the compressor (1) to zero.

## Revendications

1. Installation de climatisation de véhicule par le procédé de détente frigorifique de CO₂, dans laquelle du dioxyde de carbone (CO₂) est mis en circulation dans un circuit fermé (2) au moyen d'un compresseur (1), au moins deux échangeurs de chaleur (3, 5) étant disposés l'un derrière l'autre dans le sens de l'écoulement, et d'une part un compresseur (1) est disposé entre ces derniers, tandis qu'une soupape de détente (4) est disposée entre ces derniers du côté opposé du circuit (2), **caractérisée en ce que** le compresseur peut être régulé par l'intermédiaire de la pression dans sa chambre de refoulement (18), et **en ce qu'**un circuit partiel (22, 22') dérivé du circuit conduit dans la chambre de refoulement (18) du compresseur (1) et de celle-ci vers son conduit d'aspiration, une soupape (21, 21') qui limite le débit d'écoulement et une soupape de régulation (23, 23') étant prévues dans le circuit partiel de telle sorte que la pression dans la chambre de refoulement (18) et donc la capacité du compresseur puissent être régulés, la dérivation étant disposée entre l'échangeur de chaleur (5) situé en premier dans le sens de l'écoulement et la soupape de détente (4) de telle sorte que le circuit partiel (22, 22') refroidit le compresseur (1).

2. Installation de climatisation selon la revendication 1, **caractérisée en ce qu'**un emplacement de séparation d'huile (20) est disposé dans le circuit (2) en amont du premier échangeur de chaleur (5) dans la direction d'écoulement, le point de dérivation pour le circuit partiel (22, 22') qui passe par la chambre de refoulement (18) se trouvant au point de séparation d'huile (20) de sorte que l'écoulement partiel dans la zone du point de séparation d'huile (20) entraîne avec lui vers la chambre de refoulement (18) l'huile qui a été séparée.

3. Installation de climatisation selon les revendications 1 ou 2, **caractérisée en ce qu'**entre le compresseur (1) et le premier échangeur de chaleur (5) dans le sens de l'écoulement est disposé un séparateur d'huile depuis lequel l'huile soumise à la pression du côté haute pression du compresseur (1) est renvoyée dans la chambre de refoulement (18) du compresseur (1) par un circuit d'huile (24) prévu en plus du circuit partiel (22'), une soupape (26) limitant l'écoulement étant disposée dans le circuit d'huile (24).

4. Installation de climatisation selon les revendications 1 à 3, **caractérisée en ce que** le circuit partiel (22) dérivé ou le circuit d'huile (24) passent dans la chambre secondaire (30) qui sert de joint d'étanchéité d'arbre (31) et de palier d'arbre (32), et de celle-ci dans l'espace principal de la chambre de refoulement (18).

5. Installation de climatisation selon l'une des revendications 1 à 4, **caractérisée en ce que** le circuit partiel (22) dérivé ou le circuit d'huile (24) passent par au moins un alésage (29, 33) ménagé dans le boîtier et passent à proximité du joint d'étanchéité d'arbre (31).

6. Installation de climatisation selon l'une des revendications 1 à 5, **caractérisée en ce qu'**un séparateur d'huile (28) traversé par le circuit partiel (22, 22') est disposé contre la chambre de refoulement (18) et empêche que de l'huile soit entraînée hors de la chambre de refoulement (18).

7. Installation de climatisation selon la revendication 3, **caractérisée en ce qu'**un refroidisseur d'huile (25) à contre-courant est prévu dans le circuit d'huile, la partie à contre-courant du refroidisseur d'huile (25) étant disposée entre le deuxième échangeur de chaleur (3) et le côté aspiration du compresseur (1) dans le sens de l'écoulement.

8. Installation de climatisation selon l'une des revendications 1 à 7, **caractérisée en ce qu'**un canal d'huile conduisant de la chambre secondaire (30) jusque dans l'espace principal de la chambre de refoulement (18) remonte obliquement depuis l'emplacement le plus bas de la chambre secondaire (30) de sorte que l'huile se rassemble dans le fond de la chambre secondaire (30).

9. Installation de climatisation selon l'une des revendications 1 à 8, caractérisée en ce le compresseur (1) se trouve en liaison à entraînement permanent avec un entraînement de véhicule, la capacité du compresseur (1) pouvant être réglée à zéro.

10. Installation de climatisation selon la revendication 9, **caractérisée en ce que** pour la régulation de la capacité du compresseur (1) à puissance nulle, une liaison qui présente une soupape (37) est prévue entre sa chambre sous pression et sa chambre d'aspiration (35, 36).
